# EUROPEAN PATENT APPLICATION

(11) **EP 4 297 144 A1**
(43) Date of publication of application: **27.12.2023**
(21) Application number: 22866238.3
(22) Date of filing: 11.07.2022
(51) Int. Cl.: H01M 10/0587, H01M 50/457, H01M 50/466

(54) **ELECTRODE ASSEMBLY AND BATTERY CELL RELATED TO SAME, AND BATTERY, APPARATUS AND MANUFACTURING METHOD**

(30) Priority: 10.09.2021 CN 202111062600
(71) Applicant: Contemporary Amperex Technology Co., Limited, Ningde City, Fujian 352100 (CN)
(72) Inventor: GUO, Suogang, Ningde, Fujian 352100 (CN); FU, Chenghua, Ningde, Fujian 352100 (CN); YE, Yonghuang, Ningde, Fujian 352100 (CN); ZHANG, Chenchen, Ningde, Fujian 352100 (CN)
(74) Representative: Rowlands, Stuart Michael
(86) International application number: PCT/CN2022/104991
(87) International publication number: WO 2023/035763

(57) **Abstract**

Disclosed in the present application are an electrode assembly and a battery cell related to same, and a battery, an apparatus and a manufacturing method. The electrode assembly comprises: a first electrode plate and a second electrode plate, which have opposite polarities; and a spacer, which is used for separating the first electrode plate and the second electrode plate, wherein the spacer comprises at least two layers, and the first electrode plate, the second electrode plate and the spacer are wound to form the electrode assembly. By means of the electrode assembly, the service life of a battery can be prolonged, and the safety of the battery can be improved.

## Description

### CROSS-REFERENCE TO RELATED APPLICATIONS

The present application refers to Chinese Patent Application No. 202111062600.7, filed on September 10, 2021 and entitled "ELECTRODE ASSEMBLY AND RELATED BATTERY CELL, BATTERY, APPARATUS AND MANUFACTURING METHOD THEREFOR", the entire content of which is incorporated herein by reference.

### TECHNICAL FIELD

The present application relates to the field of battery technologies, and in particularly, to an electrode assembly and a related battery cell, battery, apparatus and manufacturing method therefor.

### BACKGROUND

A battery, such as a lithium-ion battery, has advantages of small size, high energy density, high power density, multiple cycle times, long storage time, and the like, and has been widely applied to some electronic devices, electric vehicles, electric toys and electric devices. For example, the lithium-ion battery has been widely applied to products such as mobile phones, notebook computers, electro mobiles, electric automobiles, electric airplanes, electric ships, electric toy cars, electric toy ships, electric toy airplanes, and electric tools.

In the development of the battery technology, in addition to improving performance of batteries, the service life and safety cannot be ignored. If the service life of batteries does not reach the expected time, the maintenance and use costs of the batteries will be high. If the safety of the batteries cannot be ensured, the batteries cannot be used normally. Therefore, how to extend the service life of a battery and improve the safety of the battery is an urgent technical problem to be solved in the battery technology.

### SUMMARY

In view of the above problem, the present application provides an electrode assembly and a related battery cell, battery, apparatus and manufacturing method therefor, to extend the service life of the battery and improve the safety of the battery.

An embodiment in a first aspect of the present application provides an electrode assembly, which includes: a first electrode sheet and a second electrode sheet having different polarities; and a separating member configured to separate the first electrode sheet and the second electrode sheet, the separating member including at least two layers, where the first electrode sheet, the second electrode sheet and the separating member are wound to form the electrode assembly.

In the technical solution of the embodiment of the present application, the strength of the separating member is increased by increasing the number of layers of the separating member, and thus when the electrode assembly produces lithium dendrites due to lithium plating or the first electrode sheet and the second electrode sheet produce burrs during winding, the separating member is not easily punctured or damaged, thereby effectively preventing the problem of a short circuit of the electrode assembly caused by the breakage of the separating member, reducing the risk of failure of the electrode assembly, and improving the service life and safety of the electrode assembly.

In some embodiments, the separating member includes a first separating member and a second separating member, and the second separating member is formed at a folding end of the first separating member.

Since the second separating member is formed at a folding end of the first separating member, it is not necessary to separately provide and fix the second separating member, so that the winding process is more convenient and the integrity of the separating member better.

In some embodiments, the electrode assembly includes a starting segment along a winding direction, and the end of the first separating member is located in the starting segment.

The end of the first separating member is located in the starting segment, so that the second separating member extends a short distance from the starting segment and can reach a first bending position close to the starting segment, thereby saving the material of the separating member and reducing the cost while increasing the strength of the separating member at the bending position and reducing the probability of its breakage.

In some embodiments, the electrode assembly includes a bending region formed by winding and bending the first electrode sheet, the second electrode sheet and the separating member, the bending region includes a first bending position close to the starting segment along the winding direction, the first bending position is provided with the first separating member and the second separating member, and the first separating member and the second separating member extend from the starting segment to exceed the first bending position.

Since the closer a bending position is to the starting segment, the greater stress it receives, the number of layers and thickness of the separating member at the first bending position can be at least increased by providing the first separating member and the second separating member at the first bending position and allowing the first separating member and the second separating member to extend from the starting segment to exceed the first bending position, thereby at least protecting the most vulnerable part of the separating member, improving the service life and safety of the electrode assembly, and maximizing the material saving for the second separating member.

In some embodiments, the electrode assembly includes a bending region formed by winding and bending the first electrode sheet, the second electrode sheet and the separating member, the bending region includes a plurality of bending positions along a winding direction, the separating member includes a first separating member and a second separating member, and the first separating member and the second separating member are stacked at at least one of the plurality of bending positions.

The second separating member is additionally provided at some or all of the plurality of bending positions, which can increase the number of layers and thickness of the separating member at the bending positions, improve the strength of the separating member, reduce the probability of its breakage, and improve the service life and safety of the electrode assembly.

In some embodiments, second separating members are arranged at internals along the winding direction.

The second separating members are arranged at internals in the winding direction, so that the arrangement of the second separating members is more flexible, and the waste of the material of the second separating members could be avoided by additionally providing the second separating member only at a position where the strength needs to be increased.

In some embodiments, the electrode assembly includes a starting segment along the winding direction, the plurality of bending positions include a first bending position and a second bending position, the first bending position is closer to the starting segment than the second bending position, the first separating member and the second separating member are disposed at the first bending position and the second bending position, and a thickness of a part of the second separating member located at the first bending position is greater than a thickness of a part of the second separating member located at the second bending position.

Since the stress the first bending position receives is greater than that the second bending position receives, the second separating member may adapt to strength requirements of different positions by setting the thickness of the part of the second separating member located at the first bending position to be greater than the thickness of the part of the second separating member located at the second bending position, which reduces the amount of the second separating member while reducing the probability of breakage of the separating member.

In some embodiments, the second separating member is bonded to a surface of the first separating member.

The second separating member is disposed on the surface of the first separating member by bonding, so that the second separating member does not shift easily during charging and discharging, and effectively protects the bonding place continuously.

In some embodiments, the first separating member includes two surfaces along a thickness direction, and second separating members are located on a same surface of the first separating member.

The second separating members are disposed on the same surface of the first separating member, so that the processing for the second separating member is more convenient, and when the first separating member is strained due to the binding force, the provision of the second separating members on the same surface could reduce the impact on the distance between the first electrode sheet and the second electrode sheet in the case of enhancing the strength of the separating member, and aggravation of the lithium plating phenomenon of the electrode assembly is avoided.

In some embodiments, the first separating member and the second separating member have different thicknesses.

The first separating member and the second separating member may be designed to have different thicknesses, so as to meet requirements of different models of electrode assemblies or different protection positions for the strength of the separating member.

An embodiment in a second aspect of the present application provides a manufacturing method for an electrode assembly, which includes: providing a first electrode sheet and a second electrode sheet having different polarities, as well as a separating member configured to separate the first electrode sheet and the second electrode sheet, where the separating member includes at least two layers; and winding the first electrode sheet, the second electrode sheet and the separating member to form the electrode assembly.

In some embodiments, the separating member includes a first separating member and a second separating member, and the providing the separating member includes: folding from an end of the first separating member to form the second separating member, to form the separating member including at least two layers.

In some embodiments, the separating member includes a first separating member and a second separating member, and the providing the separating member includes: bonding the second separating member to a preset position on a surface of the first separating member, to from the separating member including at least two layers.

An embodiment in a third aspect of the present application provides a battery cell, which includes the electrode assembly in the above embodiment.

An embodiment in a fourth aspect of the present application provides a battery, which includes the battery cell in the above embodiment.

An embodiment in a fifth aspect of the present application provides a power consumption apparatus, which includes the battery in the above embodiment, the battery being configured to provide electric energy.

The above description is merely an overview of the technical solutions of the present application. In order to comprehend the technical means of the present application better, it can be implemented according to the contents of the specification, and in order to make the above and other purposes, features and advantages of the present application more obvious and comprehensible, the specific embodiments of the present application will be specifically provided hereinafter.

### BRIEF DESCRIPTION OF THE DRAWINGS

In order to illustrate the technical solutions in the embodiments of the present application more clearly, brief description will be made below to the accompanying drawings required in the embodiments of the present application. It will be apparent that the accompanying drawings described below are some embodiments of the present application only, and other drawings could be obtained based on these accompanying drawings by those ordinary skilled in this art without creative efforts.

In the accompanying drawings, unless otherwise specified, same or similar components or elements are denoted by same reference signs throughout multiple accompanying drawings. These accompanying drawings are not necessarily drawn to scale. It should be understood that these accompanying drawings only depict some embodiments disclosed in the present application, and should not be considered as limitation to the scope of the present application.
FIG. 1 is a schematic structural diagram of a vehicle provided in some embodiments of the present application;
FIG. 2 is a schematic exploded view of a battery provided in some embodiments of the present application;
FIG. 3 is a schematic exploded view of a battery cell provided in some embodiments of the present application;
FIG. 4 is a schematic structural diagram of an electrode assembly provided in some embodiments of the present application;
FIG. 5 is a schematic structural diagram of an unfolded electrode assembly provided in some embodiments of the present application;
FIG. 6 is a schematic structural diagram of an electrode assembly provided in some other embodiments of the present application;
FIG. 7 is a schematic structural diagram of an electrode assembly provided in still other embodiments of the present application;
FIG. 8 is a schematic structural diagram of the electrode assembly in FIG. 7 after unfolding; and
FIG. 9 is a schematic flowchart of a manufacturing method for an electrode assembly provided in some embodiments of the present application.

### Description of reference signs:

1-vehicle, 2-battery, 3-controller, 4-motor;
5-box, 51-first box portion, 52-second box portion, 53-accommodating space;
6-battery cell, 61-end cover, 62-housing;
100-electrode assembly, 110-first electrode sheet, 120-second electrode sheet, 130-separating member, 131-first separating member, 132-second separating member, 140-starting segment;
Ai-first surface, A₂-second surface;
B-bending region, Bi-first bending position, B₂-second bending position;
X-winding direction of the electrode assembly, Y-thickness direction of the first separating member.

### DESCRIPTION OF EMBODIMENTS

Embodiments of technical solutions of the present application will be described below in detail with reference to accompanying drawings. The following embodiments and accompanying drawings are intended only to illustrate the technical solutions of the present application more clearly and are therefore intended as examples only, and cannot be used to limit the protection scope of the present application. Only the parts related to the technical solutions of the present application are schematically shown in the accompanying drawings, and they do not represent their actual structures as products.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusions.

In the description of the embodiments of the present application, the technical terms such as "first" and "second" are merely used to distinguish different objects, and shall not be understood as an indication or implication of relative importance or implicit indication of the quantity of indicated technical features, a specific order or primary-secondary relationship.

The phrase "embodiment" mentioned herein means that the specific features, structures, or characteristics described with reference to the embodiment may be included in at least one embodiment of the present application. The phrase at various locations in the specification does not necessarily refer to the same embodiment, or an independent or alternative embodiment that is mutually exclusive from another embodiment. Those skilled in the art understand, in explicit and implicit manners, that the embodiments described herein may be combined with another embodiment.

In the description of the embodiments of the present application, the term "and/or" is only an association relation describing associated objects, which means that there may be three relations. For example, A and/or B may represent three situations: A exists alone, both A and B exist, and B exists alone. In addition, the character "/" herein generally indicates that the associated objects before and after the character are in an "or" relationship.

In the description of the embodiments of the present application, the term "a plurality of" means two or more (including two). Similarly, "a plurality of groups" means two or more groups (including two groups), and "a plurality of sheets" means two or more sheets (including two sheets).

In the description of the embodiments of the present application, orientations or positional relationships indicated by the technical terms such as "center", "lengthwise", "crosswise", "length", "width", "thickness", "up", "down", "front", "rear", "left", "right", "vertical", "horizontal", "top", "bottom", "inside", "outside", "clockwise", "counterclockwise", "axial direction", "radial direction" and "circumferential direction" are orientations or positional relationships shown based on the drawings, and the terms are merely for convenience of describing the embodiments of the present application and for simplifying the description, rather than for indicating or implying that an apparatus or element indicated must have a specific orientation, and must be constructed and operated in a specific orientation, which thus shall not be understood as limitation to the embodiments of present application.

In the description of the embodiments of the present application, unless otherwise explicitly specified and defined, the technical terms, such as "installation", "interconnection", "connection" and "fixing", should be understood in a broad sense; for example, they may be either a fixed connection, or a detachable connection, or an integrated connection; they may be a mechanical connection, or an electrical connection; and they may be a direct connection, or an indirect connection via an intermediate medium, or communication between interiors of two elements or the interactive relationship of two elements. Those of ordinary skill in the art may appreciate the specific meanings of the foregoing terms in the embodiments of the present application according to specific conditions.

In the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is not limited in the embodiments of the present application. The battery cell is generally divided into three types according to the way of packaging: a cylindrical battery cell, a prismatic battery cell and a pouch battery cell, which is also not limited in the embodiments of the present application.

The battery cell includes an electrode assembly and an electrolyte, and the electrode assembly is composed of a positive electrode sheet, a negative electrode sheet and a separating member. The operation of the battery cell mainly relies on movement of metal ions between the positive electrode sheet and the negative electrode sheet. The positive electrode sheet includes a positive electrode current collector and a positive active material layer. The positive active material layer is coated on a surface of the positive electrode current collector, the current collector not coated with the positive active material layer protrudes from the current collector coated with the positive active material layer, and the current collector not coated with the positive active material layer is used as a positive tab. In an example of a lithium-ion battery, the material of the positive electrode current collector may be aluminum, and the positive active material may be lithium cobalt oxides, lithium iron phosphate, ternary lithium, lithium manganate, or the like. The negative electrode sheet includes a negative electrode current collector and a negative active material layer. The negative active material layer is coated on a surface of the negative electrode current collector, the current collector not coated with the negative active material layer protrudes from the current collector coated with the negative active material layer, and the current collector not coated with the negative active material layer is used as a negative tab. The material of the negative electrode current collector may be copper, and the negative active material may be carbon, silicon, or the like. In order to ensure that no fusing occurs when a large current passes, there are a plurality of positive tabs which are stacked together, and there are a plurality of negative tabs which are stacked together. The material of the separating member may be polypropylene (PP), polyethylene (PE), or the like. In addition, the electrode assembly may be a winding structure or a laminated structure, which is not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for packaging one or more battery cells. The box may avoid liquid or other foreign matters to affect charging or discharging of the battery cell.

With the development of the battery technology, it is necessary to consider factors in multiple aspects simultaneously, such as energy density, cycle life, discharge capacity, charging and discharging rate and other performance parameters. In addition, safety of the battery should also be considered.

The separating member is very important for the electrode assembly. The separating member is disposed between the positive electrode sheet and the negative electrode sheet, and mainly configured to prevent the contact between the positive electrode sheet and the negative electrode sheet, so as not to cause an internal short circuit in the electrode assembly and result in a reduction in performance and service life of the battery directly.

The electrode assembly usually includes a bending region and a non-bending region. The curvature of the electrode assembly in the bending region is greater, the stress it receives in the bending region is greater, and the capacity ratio of the negative active material to the positive active material in location of greater stress of the bending region is lower than that at other positions. Thus, lithium dendrites are more easily produced in location of greater stress of the bending region during the use of the electrode assembly. Under the action of the stress, the lithium dendrites easily puncture the separating member to result in the contact between the positive electrode sheet and the negative electrode sheet, causing an internal short circuit in the electrode assembly.

In addition, since the positive electrode sheet and the negative electrode sheet may produce microcracks during winding or stacking for example, and further produce burrs, the separating member is also easily punctured by the burrs under the action of the large stress, thereby causing a short circuit in the electrode assembly and even causing thermal runaway phenomena such as fire and explosion of the battery cell.

In view of this, the inventor of the present application has designed an electrode assembly, and the electrode assembly includes a separating member with at least two layers disposed between adjacent first and second electrode sheets. In such a electrode assembly, the probability of breakage of the separating member can be reduced, thereby reducing the risk of an internal short circuit between the first electrode sheet and the second electrode sheet, and improving the service life and safety of a battery.

The electrode assembly disclosed in the embodiments of the present application is applicable to a battery cell, a battery and a power consumption apparatus using a battery.

The power consumption apparatus may be a vehicle, a mobile phone, a portable device, a notebook computer, a ship, a spacecraft, an electric toy, an electric tool, and the like. The vehicle may be a fuel-powered vehicle, a gas-powered vehicle or a new energy vehicle, and the new energy vehicle may be a battery electric vehicle, a hybrid vehicle, an extended-range vehicle, or the like; the spacecraft includes an airplane, a rocket, a space shuttle, a spaceship, and the like; the electric toy includes a fixed or mobile electric toy, such as a game console, an electric vehicle toy, an electric ship toy, and an electric airplane toy; and the electric tool includes an electric metal cutting tool, an electric grinding tool, an electric assembling tool and an electric railway tool, such as an electric drill, an electric grinder, an electric spanner, an electric screwdriver, an electric hammer, an electric impact drill, a concrete vibrator and an electric planer. The above power consumption apparatus is not specially limited in the embodiments of the present application.

For convenience of description, the following embodiments will be explained by an example that the power consumption apparatus is a vehicle.

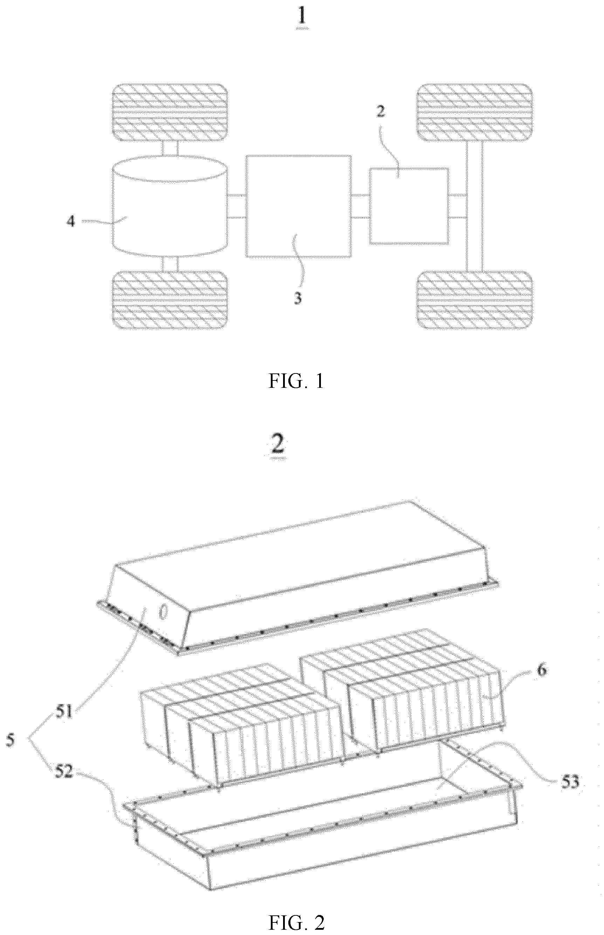

FIG. 1 is a schematic structural diagram of a vehicle 1 provided in some embodiments of the present application. As shown in FIG. 1, the vehicle 1 is internally provided with a battery 2, and the battery 2 may be disposed at the bottom, head or tail of the vehicle 1. The battery 2 may be configured to supply power to the vehicle 1. For example, the battery 2 may be used as an operation power source of the vehicle 1.

The vehicle 1 may further include a controller 3 and a motor 4, and the controller 3 is configured to control the battery 2 to supply power to the motor 4, for example, for a working power demand of the vehicle 1 during startup, navigation and running.

In some embodiments of the present application, the battery 2 may be used not only as an operation power source of the vehicle 1, but also as a driving power source of the vehicle 1, replacing or partially replacing fuel or natural gas to provide driving power for the vehicle 1.

FIG. 2 is a schematic exploded view of a battery 2 provided in some embodiments of the present application. As shown in FIG. 2, the battery 2 includes a box 5 and a battery cell 6, and the battery cell 6 is accommodated in the box 5.

The box 5 is configured to accommodate the battery cell 6, and the box 5 may be a variety of structures. In some embodiments, the box 5 may include a first box portion 51 and a second box portion 52, the first box portion 51 and the second box portion 52 are covered with each other, the first box portion 51 and the second box portion 52 jointly define an accommodating space 53 for accommodating the battery cell 6. The second box portion 52 may be a hollow structure with one end open, the first box portion 51 is a plate-like structure, and the first box portion 51 covers the opening side of the second box portion 52 to form the box 5 having the accommodating space 53; or both the first box portion 51 and the second box portion 52 may be hollow structures with one side open, and the opening side of the first box portion 51 covers the opening side of the second box portion 52 to form the box 5 having the accommodation space 53. Certainly, the first box portion 51 and the second box portion 52 may be in various shapes, such as a cylinder or a cuboid.

In order to improve the sealing after the first box portion 51 and the second box portion 52 are connected, a sealing member may be disposed between the first box portion 51 and the second box portion 52, such as sealant, a sealing ring.

It is assumed that the first box portion 51 covers the top of the second box portion 52, the first box portion 51 may be referred to as an upper box cover, and the second box portion 52 may be referred to as a lower box.

In the battery 2, a plurality of battery cells 6 are provided. The plurality of battery cells 6 may be in series connection, parallel connection or series-parallel connection, and the series-parallel connection means that the plurality of battery cells 6 are connected in series and parallel. The plurality of battery cells 6 may be in direct series connection, parallel connection or series-parallel connection, and then the whole body composed of the plurality of battery cells 6 is accommodated in the box 5. Certainly, it is also possible that the plurality of battery cells 6 are in series connection, parallel connection or series-parallel connection first to form a battery module, and multiple battery modules are then in series connection, parallel connection or series-parallel connection to form a whole body, which is accommodated in the box 5.

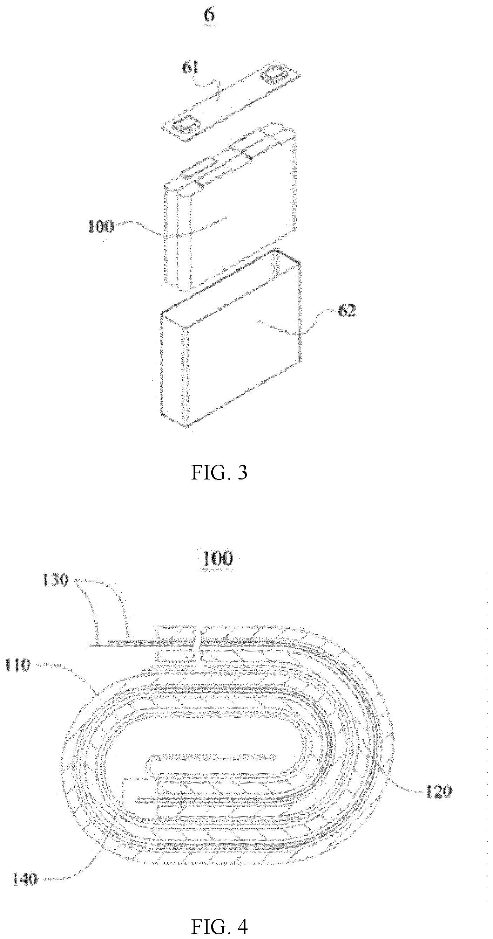

With reference to FIG. 3, FIG. 3 is a schematic exploded view of a battery cell 6 provided in some embodiments of the present application. The battery cell 6 refers to the smallest unit for constituting the battery 2. As shown in FIG. 3, the battery cell 6 includes an end cover 61, a housing 62, an electrode assembly 100 and other functional components.

The end cover 61 refers to a component that covers an opening of the housing 62 to isolate the internal environment of the battery cell 6 from the external environment. The shape of the end cover 61 may adapt to the shape of the housing 62 to fit the housing 62. The end cover 61 may be made of a material with a certain hardness and strength (such as aluminum alloy), and in this way, the end cover 61 does not easily deform when it is squeezed and collided, so that the structural strength of the battery cell 6 is higher, and the safety performance can be improved. Functional components such as electrode terminals may be disposed on the end cover 61. The electrode terminals may be configured to be electrically connected with the electrode assembly 100 for outputting or inputting electric energy of the battery cell 6. In some embodiments, a pressure relief mechanism may be further disposed on the end cover 61, the pressure relief mechanism being configured to relieve an internal pressure when the internal pressure or temperature of the battery cell 6 reaches a threshold. The material of the end cover 61 may be various, for example, copper, iron, aluminum, stainless steel, aluminum alloy, plastic, which is not specially limited in the embodiments of the present application. In some embodiments, an inner side of the end cover 61 may further be provided with an insulating member, and the insulating member may be configured to isolate electrical connection components in the housing 62 from the end cover 61 to reduce the risk of a short circuit. Exemplarily, the insulating member may be made of plastic, rubber or other materials.

The housing 62 is an assembly configured to fit the end cover 61 to form the internal environment of the battery cell 6, where the formed internal environment may be used to accommodate the electrode assembly 100, an electrolytic solution and other components. The housing 62 and the end cover 61 may be independent components, an opening may be provided on the housing 62, and the end cover 61 covers the opening at the opening to form the internal environment of the battery cell 6. The end cover 61 and the housing 62 may be integrated. Specifically, the end cover 61 and the housing 62 may form a common connecting face first before other components are placed in the housing, and when the interior of the housing 62 is required to be packaged, the end cover 61 then covers the housing 62. The housing 62 may be in various shapes and sizes, such as a cuboid, a cylinder, a hexagonal prism. Specifically, the shape of the housing 62 may be determined according to the specific shape and size of the electrode assembly 100. The material of the housing 62 may be various, for example, copper, iron, aluminum, stainless steel, aluminum alloy, plastic, which is not specially limited in the embodiments of the present application.

The electrode assembly 100 is a component in the battery cell 6 that is infiltrated in the electrolytic solution to undergo an electrochemical reaction. The housing 62 may contain one or more electrode assemblies 100. The electrode assembly 100 is mainly formed by winding a positive electrode sheet and a negative electrode sheet, and a separating member is usually disposed between the positive electrode sheet and the negative electrode sheet. Parts of the positive electrode sheet and the negative electrode sheet that have active materials constitute a main body portion of the electrode assembly 100, and parts of the positive electrode sheet and the negative electrode sheet that do not have the active materials respectively constitute tabs. A positive tab and a negative tab may be located at one end of the main body portion together or at two ends of the main body portion, respectively. During the charging and discharging of the battery cell 6, the positive active material and the negative active material react with the electrolytic solution, and the tabs are connected to the electrode terminals to form a current loop.

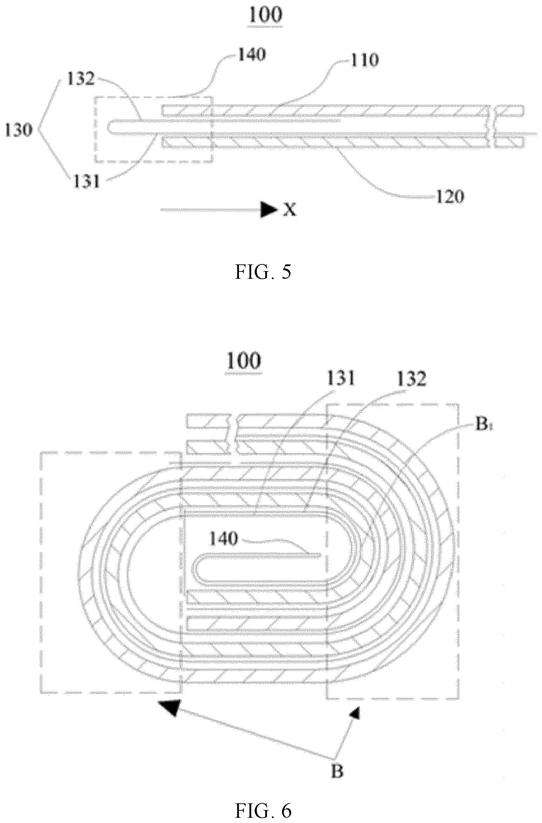

With reference to FIG. 4 and FIG. 5, FIG. 4 is a schematic structural diagram of an electrode assembly 100 provided in some embodiments of the present application.

As shown in FIG. 4, the electrode assembly 100 includes: a first electrode sheet 110 and a second electrode sheet 120 having opposite polarities; and a separating member 130 configured to separate the first electrode sheet 110 and the second electrode sheet 120, the separating member 130 including at least two layers, where the first electrode sheet 110, the second electrode sheet 120 and the separating member 130 are wound to form the electrode assembly 100.

The first electrode sheet 110 and the second electrode sheet 120 having opposite polarities mentioned in the present application may be understood as a positive electrode sheet and a negative electrode sheet. The separating member 130 mentioned in the present application may be referred to as a separator, which is shown with a line in the drawings, but actually the separating member 13 has a thickness. The winding mentioned in the present application should be understood as winding the first electrode sheet 110, the second electrode sheet 120 and the separating member 130 into several turns to form the electrode assembly 100. One turn refers to that a certain point on the electrode assembly 100 is used as a starting end for calculation, and travels along a winding direction X (FIG. 5) for one circle to reach another point to locate an ending end, the ending end and the starting end as well as the center of the turn are on a straight line, and the starting end is between the ending end and the center of the turn. Each turn may include a layer of the first electrode sheet 110, a layer of the separating member 130, a layer of the second electrode sheet 120 and a layer of the separating member 130, and the separating member 130 is configured to separate adjacent turns or adjacent first and second electrode sheets 110 and 120 in the same turn. The separating member 130 with at least two layers mentioned in the present application may be understood as at least adding another layer of the separating member 130 based on a layer of the separating member 130 between the first electrode sheet 110 and the second electrode 120 in some cases.

It can be understood that the separating member 130 with at least two layers is disposed between the adjacent first and second electrode sheets 110 and 120 and is wound to form the electrode assembly 100, which can increase the number of layers and strength of the separating member 130 of the electrode assembly 100. Thus, when the first electrode sheet 110 and/or the second electrode sheet 120 have a problem of lithium plating or produce burrs during the winding, the separating member 130 is not easily punctured or damaged, which reduces the risk of a short circuit in the electrode assembly 100 due to the breakage of the electrode assembly 130, and improves the service life and safety of the electrode assembly 100.

With reference to FIG. 5, FIG. 5 is a schematic structural diagram of an unfolded electrode assembly 100 provided in some embodiments of the present application.

As shown in FIG. 5, in some embodiments of the present application, the separating member 130 includes a first separating member 131 and a second separating member 132, and the second separating member 132 is formed at a folding end of the first separating member 131.

The first separating member 131 may be understood as a layer of the separating member 130 between the first electrode sheet 110 and the second electrode sheet 120 in some cases described above, that is, a basic separating member; and the second separating member 132 may be understood as at least one added layer of the separating member, that is, an additional separating member. The second separating member 132 is formed at a folding end of the first separating member 131, which may be understood as a face that the second separating member 132 is formed by folding the end of the first separating member 131 in half, and the position where the folding in half occurs is a boundary between the first separating member 131 and the second separating member 132.

According to this setting, since the second separating member 132 extends directly from the end of the first separating member 131, it is not necessary to separately add and fix the second separating member 132, so that the winding process is more convenient, and the integrity of the separating member 130 is better.

As shown in FIG. 4 and FIG. 5, in some embodiments of the present application, the electrode assembly 100 includes a starting segment 140 along the winding direction X, and the end of the first separating member 131 is located in the starting segment.

The starting segment 140 along the winding direction X mentioned in the present application refers to an end of the electrode assembly 100 located in the innermost turn. According to this setting, the second separating member 132 may extend along the winding direction X from the starting segment 140 and pass through a bending position of the innermost turn, and thus, the strength of the separating member 130 located at the bending position of the innermost turn can be increased, the probability of breakage of the separating member 130 reduced, and the distance by which the second separating member 132 needs to extend shortened, so as to save the material of the separating member 130 and reduce the cost.

With reference to FIG. 6, FIG. 6 is a schematic structural diagram of an electrode assembly 100 provided in some other embodiments of the present application.

As shown in FIG. 6, in some embodiments of the present application, the electrode assembly 100 includes a bending region B formed by winding and bending the first electrode sheet 110, the second electrode sheet 120 and the separating member 130, the bending region B includes a first bending position B₁ close to the starting segment 140 along the winding direction X, the first bending position B₁ is provided with the first separating member 131 and the second separating member 132, and the first separating member 131 and the second separating member 132 extend from the starting segment 140 to exceed the first bending position B₁.

The bending region B mentioned in the present application refers to a bending region of the electrode assembly 100 that occurs during the winding, and the curvature of the electrode assembly 100 at a surface in this region is smaller than the curvature of the electrode assembly 100 at a surface in another region. The first bending position B₁ mentioned in the present application may be understood as a bending position closest to the starting segment 140 along the winding direction X.

Since the first bending position B₁ is closest to the starting segment 140, the curvature of the electrode assembly 100 at the first bending position B₁ is the greatest, and the stress the electrode assembly 100 receives at the first bending position B₁ is also the greatest, and lithium dendrites or burrs are more easily produced at the first bending position B, thereby puncturing the separating member 130 and causing an internal short circuit in the electrode assembly 100. According to the above setting, the strength of the separating member 130 at the first bending position B₁ can be at least increased, thereby at least protecting the first bending position B₁ that is the most vulnerable, and maximizing the saving of the second separating member 132 while improving the service life and safety of the electrode assembly 100.

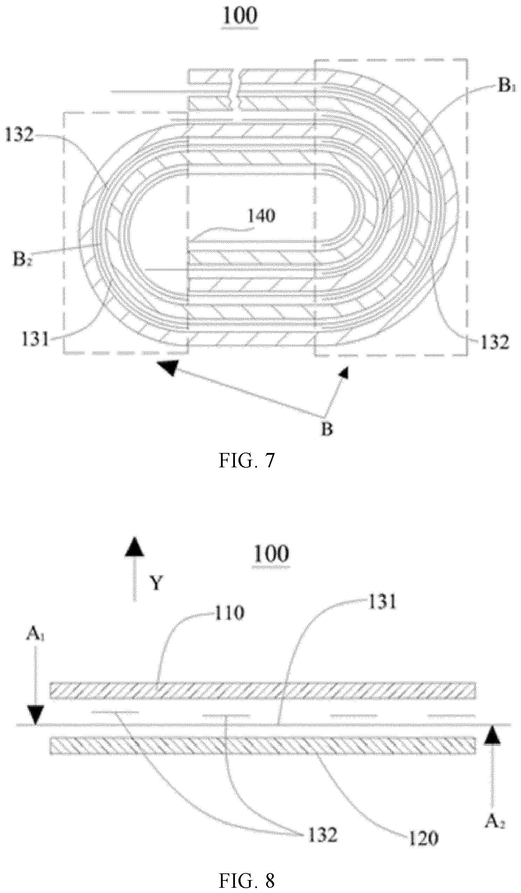

With reference to FIG. 7, FIG. 7 is a schematic structural diagram of an electrode assembly 100 provided in still other embodiments of the present application.

As shown in FIG. 7, in some embodiments of the present application, the electrode assembly 100 includes a bending region B formed by winding and bending the first electrode sheet 110, the second electrode sheet 120 and the separating member 130, the bending region B includes a plurality of bending positions along the winding direction X, the separating member 130 includes a first separating member 131 and a second separating member 132, and the first separating member 131 and the second separating member 132 are stacked at at least one of the plurality of bending positions.

FIG. 7 only shows some bending positions, such as bending positions B₁ and B₂. Multiple layers of second separating members 132 may be disposed at the same position (for example, the same bending position). The second separating member 132 may extend through one or more bending positions.

The second separating member 132 is additionally provided at some or all of the plurality of bending positions, which can increase the number of layers and thickness of the separating member 130 at the bending positions, improve the strength of the separating member 130, reduce the probability of its breakage, and improve the service life and safety of the electrode assembly 100.

As shown in FIG. 7, in some embodiments of the present application, second separating members 132 are arranged at internals along the winding direction X.

The arrangement of the second separating members 132 at intervals may be understood as a fact that the second separating members 132 are not connected as a whole piece, but are separate.

According to this setting, the second separating member 132 may be disposed only at a position where the strength needs to be increased, so that the arrangement of the second separating member 132 is more flexible, and the additional provision of the second separating member 132 at an unnecessary position can be avoided to not cause waste.

As shown in FIG. 7, in some embodiments of the present application, the electrode assembly 100 includes a starting segment 140 along the winding direction X, the plurality of bending positions include a first bending position B₁ and a second bending position B₂, the first bending position B₁ is closer to the starting segment 140 than the second bending position B₂, the first separating member 131 and the second separating member 132 are disposed at the first bending position B₁ and the second bending position B₂, and a thickness of a part of the second separating member 132 located at the first bending position B₁ is greater than a thickness of a part of the second separating member 132 located at the second bending position B₂.

The electrode assembly 100 includes an innermost turn and an outermost turn, as well as other turns between the innermost turn and the outermost turn, and the starting segment 140 is located at the starting position of the innermost turn. According to the winding rule of the electrode assembly 100, it can be known that the radius of curvature at the bending position of the electrode assembly 100 gradually decreases from the outermost turn to the innermost turn, and the stress it receives gradually increases. Therefore, the probability of breakage of the separating member 130 at the bending position gradually decreases from the innermost turn to the outermost turn, and the breakage probability at the first bending position B₁ is greater than that at the second bending position B₂.

According to the above setting, the second separating member 132 may adapt to strength requirements of different positions, which reduces the amount of the second separating member 132 while reducing the probability of breakage of the separating member 130.

In some embodiments of the present application, the second separating member 132 is bonded to a surface of the first separating member 131.

The bonding mentioned in the present application may be hot bonding. The second separating member 132 may be bonded to different positions on the surface of the first separating member 131 according to specific needs.

The second separating member 132 is disposed on the surface of the first separating member 131 by bonding, which can prevent the second separating member 132 from shifting during charging and discharging, and effect the protective effect on the bonding place.

With reference to FIG. 8, FIG. 8 is a schematic structural diagram of the electrode assembly 100 in FIG. 7 after unfolding.

As shown in FIG. 8, in some embodiments of the present application, the first separating member 131 includes two surfaces along a thickness direction Y, and second separating members 132 are located on a same surface of the first separating member 131.

The two surfaces along the thickness direction Y may include a first surface A₁ and a second surface A₂, and all of the second separating members 132 may be located on the first surface A₁ of the first separating member 131.

The long distance between the first electrode sheet 110 and the second electrode sheet 120 may affect the lithiation process, resulting in lithium plating phenomenon. The second separating members 132 are disposed on the same surface of the first separating member 131, which not only facilitates the processing of the second separating members 132, but also minimizes the impact of the second separating members 132 on the distance between the first electrode sheet 110 and the second electrode sheet 120 when the first separating member 131 is tight due to the binding force, thereby avoiding affecting the lithiation process and improving the safety of the battery.

In some embodiments of the present application, the first separating member 131 and the second separating member 132 have different thicknesses.

In some embodiments of the present application, the first separating member 131 and the second separating member 132 may have different thicknesses, and the thickness may be represented by the number of layers. Generally, the first separating member 131 is used as a basic separating member, and its thickness may be set to be equal. The second separating member 132 may have different thicknesses at different positions to increase the overall strength of the separating member 130 at these positions. In some embodiments, the number of layers of the separating member 130 in the innermost turn may be more than that in the outermost turn by 1 to 10, and the second separating member 132 in the innermost turn may be thicker than that in the outermost turn by 3 to 100 millimeters (mm).

The first separating member 131 and the second separating member 132 may have different thicknesses, which can meet requirements of different models of electrode assemblies 100 or different protection positions for the strength of the separating member 130.

The first separating member 131 and the second separating member 132 may include the same or different materials. In some embodiments of the present application, the materials of the first separating member 131 and the second separating member 132 may both be polypropylene (PP) or polyethylene (PE), so that the processing for the first separating member 131 and the second separating member 132 is more convenient, and the cost is low, which is beneficial to commercialization.

In some embodiments of the present application, the first separating member 131 may be made of PP or PE, and the second separating member 132 may be one of a polypropylene/ultra-high molecular weight polyethylene diaphragm/epoxy resin composite diaphragm, a porous polypropylene diaphragm, a coaxial composite nanofiber membrane, a porous diaphragm, a fiberglass diaphragm, and a polyvinylidene fluoride-hexafluoropropylene (PVDF-HFP) polymer electrolyte diaphragm. The polypropylene/ultra-high molecular weight polyethylene diaphragm/epoxy resin composite diaphragm can improve the porosity and heat resistance of the separating member. The porous polypropylene diaphragm can provide the combination of air permeability and puncture resistance strength. The coaxial composite nanofiber membrane is composed of composite nanofibers of a fluorine-containing shell layer and a polyimide core layer, which can not only ensure excellent infiltration, liquid retention and ionicity, but also have high mechanical strength and good heat resistance performance. The porous diaphragm is made from polyolefin mixed with silica or other inorganic substances. The fiberglass diaphragm is composed of alkali-free glass fibers, polyethylene terephthalate (PET), polyamide (PA). According to the above setting, the second separating member 132 may have high puncture resistance strength and mechanical strength.

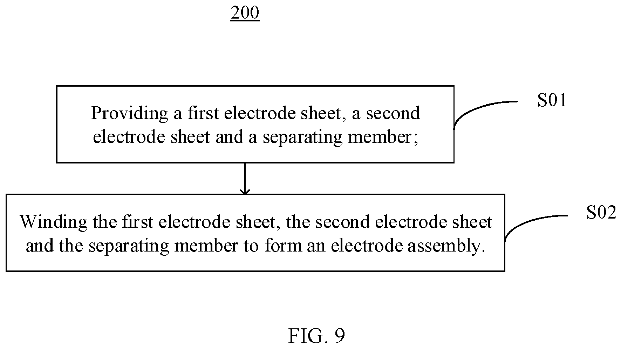

With reference to FIG. 9, FIG. 9 is a schematic flowchart of a manufacturing method 200 for an electrode assembly 100 provided in some embodiments of the present application.

As shown in FIG. 9, in some embodiments of the present application, the manufacturing method 200 for the electrode assembly 100 includes: S01, providing a first electrode sheet 110 and a second electrode sheet 120 having different polarities, as well as a separating member 130 configured to separate the first electrode sheet 110 and the second electrode sheet 120, where the separating member 130 includes at least two layers; and S02, winding the first electrode sheet 110, the second electrode sheet 120 and the separating member 130 to form the electrode assembly 100.

In some embodiments, the separating member 130 includes a first separating member 131 and a second separating member 132, and the providing the separating member 130 includes: folding from an end of the first separating member 131 to form the second separating member 132, to form the separating member 130 including at least two layers.

In some embodiments, the separating member 130 includes a first separating member 131 and a second separating member 132, and the providing the separating member 130 includes: bonding the second separating member 132 to a preset position on a surface of the first separating member 131 to form the separating member 130 including at least two layers.

Some embodiments of the present application further provide a battery cell 6, which includes the electrode assembly 100 in the above embodiment.

Some embodiments of the present application further provide a battery 2, which includes the battery cell 6 in the above embodiment.

Some embodiments of the present application further provides a power consumption apparatus, which includes the battery 2 in the above embodiment, and the battery 2 is configured to provide electric energy.

It should finally be noted that the above embodiments are merely intended for describing rather than limiting the technical solutions of the present application. Although the present application is described in detail with reference to the foregoing embodiments, those of ordinary skill in the art should understand that they may still make modifications to the technical solutions described in the foregoing embodiments, or make equivalent substitutions to some or all of the technical features therein; however, these modifications or substitutions do not make the nature of the respective technical solutions depart from the scope of the technical solutions of the embodiments of the present application, and they shall be covered in the scope of the claims and specification of the present application. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. An electrode assembly, comprising:
a first electrode sheet and a second electrode sheet having opposite polarities; and
a separating member configured to separate the first electrode sheet and the second electrode sheet, the separating member comprising at least two layers,
wherein the first electrode sheet, the second electrode sheet and the separating member are wound to form the electrode assembly.

2. The electrode assembly according to claim 1, wherein the separating member comprises a first separating member and a second separating member, and the second separating member is formed at a folding end of the first separating member.

3. The electrode assembly according to claim 2, wherein the electrode assembly comprises a starting segment along a winding direction, and the end of the first separating member is located in the starting segment.

4. The electrode assembly according to claim 3, wherein the electrode assembly comprises a bending region formed by winding and bending the first electrode sheet, the second electrode sheet and the separating member, the bending region comprises a first bending position close to the starting segment along the winding direction, the first bending position is provided with the first separating member and the second separating member, and the first separating member and the second separating member extend from the starting segment to exceed the first bending position.

5. The electrode assembly according to claim 1, wherein the electrode assembly comprises a bending region formed by winding and bending the first electrode sheet, the second electrode sheet and the separating member, the bending region comprises a plurality of bending positions along a winding direction, the separating member comprises a first separating member and a second separating member, and the first separating member and the second separating member are stacked at at least one of the plurality of bending positions.

6. The electrode assembly according to claim 5, wherein second separating members are arranged at internals along the winding direction.

7. The electrode assembly according to claim 5 or 6, wherein the electrode assembly comprises a starting segment along the winding direction, the plurality of bending positions comprise a first bending position and a second bending position, the first bending position is closer to the starting segment than the second bending position, the first separating member and the second separating member are disposed at the first bending position and the second bending position, and a thickness of a part of the second separating member located at the first bending position is greater than a thickness of a part of the second separating member located at the second bending position.

8. The electrode assembly according to any one of claims 5 to 7, wherein the second separating member is bonded to a surface of the first separating member.

9. The electrode assembly according to any one of claims 5 to 8, wherein the first separating member comprises two surfaces along a thickness direction, and second separating members are located on a same surface of the first separating member.

10. The electrode assembly according to any one of claims 5 to 9, wherein the first separating member and the second separating member have different thicknesses.

11. A manufacturing method for an electrode assembly, comprising:
providing a first electrode sheet and a second electrode sheet having different polarities, as well as a separating member configured to separate the first electrode sheet and the second electrode sheet, wherein the separating member comprises at least two layers; and
winding the first electrode sheet, the second electrode sheet and the separating member to form the electrode assembly.

12. The manufacturing method according to claim 11, wherein the separating member comprises a first separating member and a second separating member, and the providing the separating member comprises: folding from an end of the first separating member to form the second separating member, to form the separating member comprising at least two layers.

13. The manufacturing method according to claim 11, wherein the separating member comprises a first separating member and a second separating member, and the providing the separating member comprises: bonding the second separating member to a preset position on a surface of the first separating member, to form the separating member comprising at least two layers.

14. A battery cell, comprising the electrode assembly according to any one of claims 1 to 10.

15. A battery, comprising the battery cell according to claim 14.

16. A power consumption apparatus, comprising the battery according to claim 15, the battery being configured to provide electric energy.
